Europäisches Patentamt

(19) European Patent Office

Office européen des brevets

(11) Publication number: **0 147 442**
**B1**

(12) **EUROPEAN PATENT SPECIFICATION**

(45) Date of publication of patent specification: **20.01.88**

(51) Int. Cl.⁴: **A 01 B 3/26, A 01 B 17/00**

(21) Application number: **84902349.4**

(22) Date of filing: **25.05.84**

(86) International application number:
**PCT/GB84/00181**

(87) International publication number:
**WO 84/04650 06.12.84 Gazette 84/28**

(54) **PLOUGH.**

(30) Priority: **27.05.83 GB 8314830**

(43) Date of publication of application:
**10.07.85 Bulletin 85/28**

(45) Publication of the grant of the patent:
**20.01.88 Bulletin 88/03**

(84) Designated Contracting States:
**DE FR GB**

(58) References cited:
**DE-B-1 252 957**
**DE-C- 868 234**
**FR-A- 525 695**
**FR-A- 718 764**
**FR-A-2 264 468**
**US-A-3 185 220**

(73) Proprietor: **JONES, Fred Alan**
**Red House Farm Spalford Lane**
**North Scarle Lincoln LN6 9BH (GB)**

(73) Proprietor: **JONES, Jean**
**Red House Farm Spalford Lane**
**North Scarle Lincoln LN6 9BH (GB)**

(72) Inventor: **JONES, Fred Alan**
**Red House Farm Spalford Lane**
**North Scarle Lincoln LN6 9BH (GB)**

(74) Representative: **Coxon, Philip et al**
**Eric Potter & Clarkson 14 Oxford Street**
**Nottingham NG1 5BP (GB)**

Courier Press, Leamington Spa, England.

## Description

This invention relates to a plough suitable for inverting only a top layer of soil, for example to bury stalks of plants left after harvesting.

A crop which is increasingly grown in the early part of the year in Europe is oil seed rape, and after the early harvest of this crop, the ground may be reused for a second crop of another type. Harvesting of oil seed rape leaves thick stalks containing a high degree of sap which prevents their being burnt. It is therefore desirable to turn the earth so as to bury these stalks. However, full depth ploughing of the soil is too time-consuming and costly a process to be attractive to farmers, especially since full ploughing will have taken place before the rape was sown. Additionally, the harvesting of cereals leaves stubble which is desirably buried rather than burnt, since the practice of straw-burning is becoming increasingly objected to. This is difficult to achieve with conventional cultivators or ploughs.

FR—A—2,264,468 discloses a plough, mainly used in vineyards, having the features corresponding to the preamble of claim 1. DE—C—1,252,957 discloses a plough with a single beam and plough blades on it. Rotary members which rotate about horizontal shafts are provided above and before each plough blades.

The present invention provides a plough which may enable such soil turning to be undertaken more easily.

According to the invention, there is provided a plough having at least one pair of generally diverging support beams, each beam carrying a plurality of plough blades, the blades on each beam being arranged to turn earth and to move it towards the other beam, wherein the support beams diverge in a direction away from the front of the plough, characterised in that a pair of rotary members, are provided at the forward end of the diverging support beams in a central position and in which the rotary members are rotated about generally downwardly extending shafts in opposite relative directions to propel earth in generally left and right sideways directions into the path of the plough blades which fill in the earth removed by the rotary members.

In a preferred embodiment, scraping blades disc harrows, or any other surface-acting cultivating tools may be attached to the rear of the plough so that such tools follow between the pairs of beams to redistribute displaced earth so as to leave a generally flat surface. Preferably the tools are arranged to push earth back into the furrows formed by the two outermost (and rearmost) blades.

The plough of the invention enables a large area to be cultivated in one pass of the plough without creating difficulties of balance which may be experienced with a conventional reversible plough of great length. The plough achieves complete inversion of the top player of the earth, for example to a depth of 125 mm, with, consequently, a much lower power requirement than a conventional deep plough.

Reference is made to the drawings, which show a plough in accordance with a preferred embodiment of the invention, and in which:

Figure 1 is a perspective view; and

Figure 2 is a top plan view.

The plough comprises a generally horizontal wheeled frame 1 carrying a conventional draw bar arrangement 2. Extending obliquely across the main frame 1 are two support beams 4 and 5, which diverge away from the draw bar. Each beam 4 and 5 carries three conventional plough blades 6 arranged to turn earth and to move it inwardly of the frame towards the other beam of the pair. It will be appreciated that the frame 1 may readily be made larger so as to accommodate a larger number of blades on each support beam.

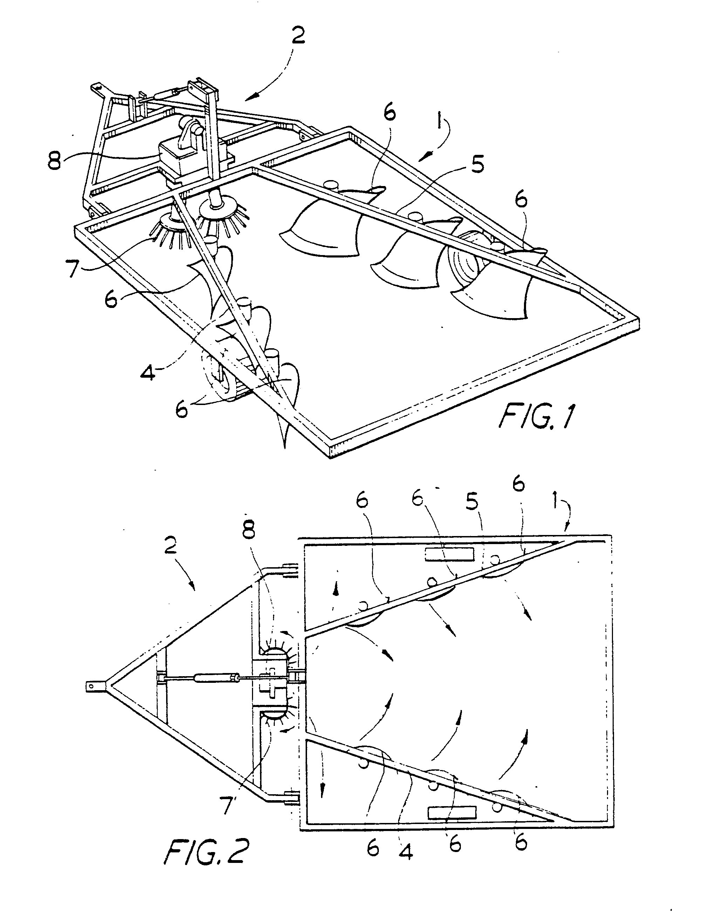

A pair of rotating spinners 7 are mounted on the front of the frame 1 between the beams 4 and 5. The spinners 7 are driven from a gear-box 8, in turn powered by a power take-off shaft of the towing tractor, and each has a plurality of rods extending from its periphery so as to define a generally frusto-conical shape, with the rods intermeshing as they enter the soil. One spinner can be mounted ahead of the other by a small degree for greatest efficiency of operation. The axes of rotation of the spinners preferably make an angle of approximately 45° therebetween. The spinners are rotated in opposite directions as indicated by the arrows A in Figure 2, so as to propel earth outwardly into the path of the plough 6 on each side.

It will be appreciated that any rotary member capable of propelling earth outwardly across the paths of the plough blades may be used in place of the spinners. Additionally, the gear-box 8 may be adaptable to give different drive ratios to ensure full and even distribution of soil of different types.

It has been found that a plough of the type described with reference to the drawings gives a very thorough inversion of the top layer of the earth, sufficient to bury completely any stalks left after harvesting, e.g. of oil seed rape, with on a single pass, but a ridged surface may be left at the outer extremities of the frame, and it is therefore preferred to attach to the rear ends of the frame a series of scraper blades (not shown) to urge earth back into the trenches or furrows left at the outer edges of the plough. Many different cultivating tools are available which could be used in place of the scraper blades to divert soil from the ridges into the trenches or furrows. No further working of the soil is then required before further sowing or planting takes place.

## Claims

1. A plough, having at least one pair of generally diverging support beams (4, 5), each beam carrying a plurality of plough blades (6), the blades on each beam being arranged to turn earth and to move it towards the other beam wherein the support beams (4, 5) diverge in a direction away from the front of the plough, characterised in that a pair of rotary members (7), are provided at the forward end of the diverging support beams (4, 5) in a central position and in which the rotary members (7) are rotated about generally downwardly extending shafts in opposite relative directions to propel earth in generally left and right side ways directions into the path of the plough blades (6) which fill in the earth removed by the rotary members (7).

2. A plough according to Claim 1 characterised in that the rotary members (7) comprise a pair of rotating spinners each spinner (7) being constructed with a plurality of rods extending from a central member with rods serving to propel the earth towards the plough blades.

3. A plough according to Claim 2 characterised in that one of the spinners (7) is mounted ahead of the other in the longitudinal direction of the plough for more efficient operation.

4. A plough according to Claim 2 or Claim 3 characterised in that the axes of rotation of the pair of spinners makes an angle of 45° therebetween.

5. A plough according to any one of Claims 1 to 4 characterised in that the rotary members (7) are driven by a gear box (8) having variable drive ratio which are selectable in dependence on the type of soil.

6. A plough according to any preceding claim, characterised in that at least one levelling tool is provided at the rear thereof.

7. A plough according to Claim 6, characterised in that the or each levelling tool is a scraper blade.

8. A plough according to Claim 6, characterised in that the or each levelling tool is a disc harrow attachment.

9. A plough according to any preceding claim, characterised in that cultivator tines are provided in front of the plough blades.

10. A plough according to any preceding claim, characterised in that the support beams are mounted within a frame having a towing coupling at one end thereof whereby the plough may be coupled to a tractor.

11. A plough according to any preceding claim, characterised in that the plough blades on one beam of the or each pair of beams are staggered longitudinally relative to the plough blades on the other beam of the pair.

## Patentansprüche

1. Pflug, mit mindestens einem Paar grundsätzlich divergierender Trag-Bäume (4, 5), deren jeder eine Mehrzahl von Pflug-Scharen (6) trägt, wovon die Scharen an jedem Baum die Boden-Krume wendend sowie in Richtung zum anderen Baum hin bewegend angeordnet sind, wobei auch die Trag-Bäume (4, 5) in einer von der Vorderseite des Pfluges wegweisender Richtung divergieren, dadurch gekennzeichnet, daß beim vorderen Ende der divergierenden Trag-Bäume (4, 5) in einer mittigen Lage ein Paar Drehvorrichtungen (7) angeordnet ist, daß diese Drehvorrichtungen (7) um je eine im wesentlichen nach unten sich erstreckende Achse sowie in einander entgegengesetzten Relativ-Richtungen sich drehend sind, so daß sie die Boden-Krume in prinzipiell nach links bzw. nach rechts seitlich weisenden Richtungen in die Bahnen der Pflug-Scharen (6) bewegend sind, und daß die Pflug-Scharen (6) die von den Drehvorrichtungen (7) abgetragene Boden-Krume wieder auffüllend sind.

2. Pflug nach Anspruch 1, dadurch gekennzeichnet, daß die Drehvorrichtungen (7) je ein Paar Drehsterne (7') beinhalten, daß jeder Drehstern (7') mit einer Mehrzahl von Stäben ausgerüstet ist, die sich von einem Mittelteil aus nach außen erstrecken, und daß durch die Stäbe die Krume zu den Pflug-Scharen bewegbar ist.

3. Pflug nach Anspruch 2, dadurch gekennzeichnet, daß der eine Drehstern (7') in Längsrichtung das Pfluges die Effizienz des Betriebes verbessernd, vor dem anderen Drehstern angeordnet ist.

4. Pflug nach einem der Ansprüche 2 oder 3, dadurch gekennzeichnet, daß die Drehachsen des Paares der Drehsterne zwischen sich einen Winkel von 45° bilden.

5. Pflug nach einem beliebigen der Ansprüche 1 bis 4, dadurch gekennzeichnet, daß die Drehvorrichtungen (7) von einem Getriebe (8) aus mit entsprechend der Bodenart wählbaren, unterschiedlichen Übersetzungen antreibbar sind.

6. Pflug nach einem beliebigen der vorherigen Ansprüche, dadurch gekennzeichnet, daß beim Pflugende wenigstens ein einebnendes Gerät angebaut ist.

7. Pflug nach Anspruch 6, dadurch gekennzeichnet, daß als das oder die einebnende(n) Gerät(e) mindestens eine Planierschar (bzw. Eisenschleife) dient.

8. Pflug nach Anspruch 6, dadurch gekennzeichnet, daß als das oder die einebnende(n) Gerät(e) mindestens eine angehängte Scheiben-Egge dient.

9. Pflug nach einem beliebigen der vorherigen Ansprüche, dadurch gekennzeichnet, daß vor den Pflug-Scharen Kultivator-Eggen-Zähne angebracht sind.

10. Pflug nach einem beliebigen der vorherigen Ansprüche, dadurch gekennzeichnet, daß die Trag-Bäume (4, 5) in einen Rahmen (Rumpf 1) eingebaut sind, der an seinem einen Ende eine Zugkupplung derart aufweist, daß der Pflug an einen Traktor ankuppelbar ist.

11. Pflug nach einem beliebigen der vorherigen Ansprüche, dadurch gekennzeichnet, daß die Pflug-Scharen an einem Baum des oder jedes Baum-Paares längsversetzt sind in Bezug auf die Pflug-Scharen an dem anderen Baum des Paares.

## Revendications

1. Charrue ayant au moins une paire de poutres porteuses (4, 5) généralement divergentes, chaque poutre portant une pluralité de lames de charrue (6), les lames sur chaque poutre étant disposées pour retourner la terre et la pousser vers l'autre poutre, les poutres porteuses (4, 5) divergeant dans une direction s'éloignant de l'avant de la charrue, caractérisée en ce qu'une paire d'organes rotatifs (7) est prévue à l'extrémité antérieure des poutres porteuses divergentes (4, 5) en une position centrale, et en ce que les organes rotatifs (7) sont entraînés en rotation autour d'arbres s'étendant généralement vers le bas, pour tourner en sens opposé l'un à l'autre afin de propulser la terre latéralement en directions généralement à gauche et à droite sur le trajet des lames de charrue (6), lesquelles remblaient la terre soulevée par les organes rotatifs (7).

2. Charrue selon la revendication 1, caractérisée en ce que les organes rotatifs (7) comprennent une paire de rotors, chaque rotor (7) étant construit avec une pluralité de tiges s'étendant à partir d'un élément central, ces tiges servant à propulser la terre vers les lames de charrue.

3. Charrue selon la revendication 2, caractérisée en ce qu'un des rotors (7) est monté en avant de l'autre dans le sens longitudinal de la charrue en vue d'un fonctionnement plus efficace.

4. Charrue selon la revendication 2 ou la revendication 3, caractérisée en ce que les axes de rotation de la paire de rotors forment entre eux un angle de 45 degrés.

5. Charrue selon l'une quelconque des revendications 1 à 4, caractérisée en ce que les organes rotatifs (7) sont entraînés par une boîte d'engrenages (8) ayant un rapport de transmission variable pouvant être choisi selon le type de sol.

6. Charrue selon l'une quelconque des revendications précédentes, caractérisée en ce qu'il est prévu au moins un outil niveleur à l'arrière de ladite charrue.

7. Charrue selon la revendication 6, caractérisée en ce que l'outil niveleur, ou bien chaque outil niveleur, est une lame râcleuse.

8. Charrue selon la revendication 6, caractérisée en ce que l'outil niveleur, ou bien chaque outil niveleur, est une herse à disques constituant un accessoire de la charrue.

9. Charrue selon l'une quelconque des revendications précédentes, caractérisée en ce que des dents de cultivateur sont prévues en avant des lames de charrue.

10. Charrue selon l'une quelconque des revendications précédentes, caractérisée en ce que les poutres porteuses sont montées dans un chassis ayant un dispositif d'attelage sur une de ses extrémités pour atteler la charrue à un tracteur.

11. Charrue selon l'une quelconque des revendications précédentes, caractérisée en ce que les lames de charrue sur l'une des poutres porteuses ou sur chacune des deux poutres porteuses sont décalées longitudinalement par rapport au lames de charrue sur l'autre des deux poutres.

0 147 442

FIG.1

FIG.2